# FASCICULE DE BREVET EUROPEEN

(11) **EP 1 886 172 B1**
(45) Date de publication et mention de la délivrance du brevet: **01.05.2013**
(21) Numéro de dépôt: 05815164.8
(22) Date de dépôt: 02.11.2005
(51) Int. Cl.: G09F 19/12, G01W 1/02

(54) **DISPOSITIF D AFFICHAGE EN RELIEF**
RELIEF-ANZEIGEEINRICHTUNG
RELIEF DISPLAY DEVICE

(30) Priorité: 02.11.2004 FR 0411633
(43) Date de publication de la demande: 13.02.2008
(73) Titulaire: Chargueraud, Thierry, 75018 Paris (FR); Simeray, Janick, 95100 Argenteuil (FR)
(72) Inventeur: Chargueraud, Thierry, 75018 Paris (FR); Simeray, Janick, 95100 Argenteuil (FR)
(86) Numéro de dépôt international: PCT/FR2005/002723
(87) Numéro de publication internationale: WO 2006/048548

(56) Documents cités:
- EP-A1- 0 513 420
- WO-A-03/026358
- DE-U1- 20 305 796
- US-A- 5 743 616
- US-A- 6 087 617
- US-A1- 2003 079 387

## Description

L'invention concerne le principe et la réalisation d'une station météorologique comportant un système d'affichage original de données et d'informations.

Les systèmes d'affichage selon l'état de l'art sont soit mécaniques : une aiguille tournant sur un cadran, soit à cristaux liquides, soit alphanumériques, avec des diodes luminescentes qui dessinent des chiffres ou des lettres.

Un tel système est connu par EP-A-0513 420.

L'affichage de données graphiques ou de symboles est particulièrement adapté à l'usage des cristaux liquides, dont les électrodes dessinent les symboles.

Cependant, l'esthétique d'un affichage à cristaux liquides est critiquable, le but de l'invention est d'offrir une alternative à l'affichage 20d'informations graphiques ou alphanumériques.

Ceci est atteint par une station météorologique selon la revendication 1.

Le document US2003/0079387 décrit un affichage qui combine une source lumineuse par diode électroluminescente, un matériau transparent illuminé par la diode, caractérisé par sa forme, qui comporte différentes facettes et différentes surfaces diffusantes (zone dont l'indice de réfraction varie notablement).

Le document US5743616 décrit un affichage qui combine une source lumineuse par diode électroluminescente, et une plaque transparente avec des ruptures d'indice de réfraction en surface. Plusieurs plaques et diodes peuvent être superposées.

Le document PCTUS0229453 décrit un panneau mural avec des diodes de plusieurs couleurs, un microcontrôleur qui fait varier la couleur du panneau en modulant le courant dans les diodes.

La combinaison de ces documents reprend le principe de diodes commandées par un circuit intégré, qui éclaire un matériau transparent diffusant en surface.

Mais cette combinaison ne réalise pas l'illumination sélective d'un motif tridimensionnel gravé au moyen d'un laser, éclat par éclat, au sein d'un bloc de verre ou de cristal, au moyen de diodes électroluminescentes commandées par un circuit intégré, en fonction du niveau lumineux ambiant, afin d'optimiser et de préserver les piles ou batteries.

Dans ces différents documents la lumière est diffusée en surface par des facettes ou bien par des dépolis qui réalisent une rupture de l'indice de réfraction, et non pas des éclats au sein d'un verre ou d'un cristal. Le fait de superposer plusieurs plaques gravées ne permet pas de réaliser un véritable relief homogène.

Selon la revendication 2, l'invention réalise une station météorologique munie d'un affichage d'informations pour des dispositifs à pile, dont l'autonomie est optimisée.

Selon la revendication 2, l'invention ne réalise pas un panneau d'affichage usuellement alimenté par le courant domestique, comme dans les documents cités.

La réalisation de motifs tridimensionnels gravés au laser point par point par éclat au sein de blocs de verre ou de cristal est connue par le brevet US 6087617.

L'invention est mieux comprise à la lumière des figures suivantes :
La figure 1 représente une station météo.
La figure 2 représente le circuit de régulation de l'énergie.

### Figure 1

La station comporte un bloc de verre ou de cristal 11 qui comporte en 14 la gravure d'un soleil, en 15 la gravure d'un nuage, et en 16 la gravure de la pluie, gravure réalisée point par point, chaque point étant réalisé par un éclat thermique ou une fêlure.

La station comporte des sources lumineuses colorées, 17, rassemblées dans une structure opaque 13, chaque dite source illumine un motif 14, 15 ou 16.

Selon un exemple de réalisation de l'invention, la dite source est une diode électroluminescente, ou bien une lampe à filament.

La couleur de la source est choisie en relation avec le motif, par exemple jaune pour le soleil, blanche pour le nuage, bleue pour la pluie.

Selon l'invention, une source par exemple bleue est réalisée avec une diode bleue.

La station comporte aussi un support 12, une électronique de gestion, par exemple des piles ou batteries rechargeables, et aussi un connecteur 18 pour une liaison à un convertisseur électrique, et un capteur lumineux 19.

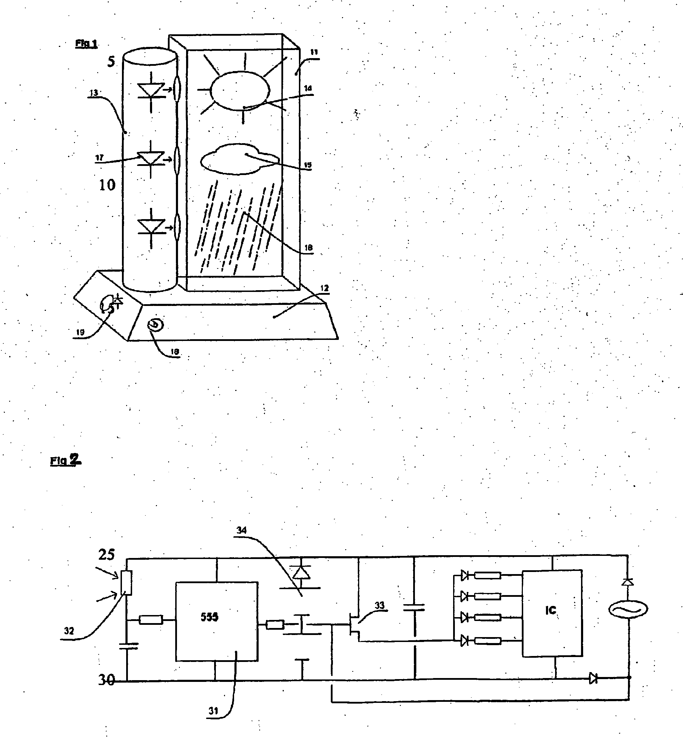

La figure 1 décrit un exemple non limitatif de réalisation de l'invention.

La figure 2 décrit un circuit qui économise les piles en commutant les diodes d'illumination en fonction d'intensité de la lumière ambiante.

Selon l'invention, le capteur 19 Figure 1 est une photo-résistance, 40un phototransistor ou une photodiode.

Associé à un circuit timer du type monostable 555, ce capteur 32 change sa résistance en fonction de la lumière ambiante, ce qui fait varier la période de pulsation de commande des diodes d'affichage. Plus la lumière ambiante est forte, plus l'allumage des diodes est fréquent.

La sortie du timer 555 commande un transistor 33 qui alimente l'ensemble des diodes d'affichage.

Ces diodes sont commutées par le circuit intégré logique, IC, de la station météo.

Quand la station est alimentée par un convertisseur de la tension secteur, alors, l'allumage des diodes est permanent, le transistor étant commandé ouvert en permanence.

Une alternative économique et simplifiée de ce circuit consiste à alimenter chaque diode en sortie du circuit intégré IC, en série avec un phototransistor ou une photorésistance 35, alors la luminosité de l'affichage est directement relié à la lumière ambiante, ce qui assure un compromis optimisé entre le contraste et l'autonomie des batteries 34.

## Revendications

1. Station météorologique comportant un affichage figuratif de la prédiction **caractérisé en ce que** cet affichage bénéficie d'un champ de vision panoramique entre 180° et 360°; d'une visibilité non-affectée par la lumière ambiante au moyen de la combinaison de:
• au moins un bloc de verre ou de cristal (11);
• au sein du ou desdits blocs (11) au moins trois motifs (14, 15, 16) gravés point par point par éclats au moyen d'un laser; réalisant chacun un relief homogène, visible et identifiable selon un champ de vision dépassant 180°, figurant respectivement la prévision d'un temps ensoleillé couvert ou pluvieux;
• au moins trois diodes électroluminescentes (17) respectivement orientées chacune vers un desdits motifs gravés;
• un circuit intégré, contrôlant l'éclairage desdits motifs (14, 15, 16) par lesdites diodes (17) en fonction de la prévision météorologique.

2. Station météorologique, selon la revendication 1 **caractérisée en ce qu'**elle est autonome et munie de piles préservées au moyen d'un circuit d'optimisation, qui régule l'intensité lumineuse des diodes (17) en fonction de la lumière ambiante, mesurée au moyen d'un capteur (32), tel qu'une photodiode, une photorésistance ou bien un phototransistor.

## Claims

1. Weather station with display in figurative forecast **characterized by** the fact that the display has a panoramic lield of vision between 180 ° and 360 ° : visibility is non-affected by the ambient light through the combination of:
- at least one block of glass or crystal (11);
or in the said blocks (11) at least three units (14, 15, 16) point by point bursts engraved by a laser; each performing a relief homogeneous visible and identifiable as a field of 180 ° contained respectively predicting a sunny cloudy or rainy;
at least three light emitting diodes (17) respectively oriented to each one of said etched patterns;
- an integrated circuit, controlling the lighting of said motivs (14, 15, 16) by said diodes (17) as a function of the meteorologic prediction.un integrated circuit, controlling the lighting of said motivs (14, 15, 16) by said diodes (17) depending on the weather forecast.

2. Weather station as said in Claim 1 **characterized in that** it is autonomous and provided with batteries preserved by means of a cicuit optimization, which controls the light intensity of the diodes (17) as a function of the ambient light, measured in means of a sensor (32), such as a photodiode, photoresistor or phototransistor.

## Patentansprüche

1. Wetterstation mit Display figurativer Vorhersage ist **dadurch gekennzeichnet, dass** das Display ein Panorama-Blickfeld zwischen 180° und 360 ° hat; Sichtbarkeit beeinflusst durch das Umgebungslicht durch die Kombination von:
- mindestens ein Block aus Glas oder Kristall (11)
einem oder mehreren des genannten Blocks (11), mit mindestens drei Motiven (14, 15, 16), die Punkt für Punkt von einem Laser eingraviert sind, realisiert mit einem homogenen Relief, sichtbar und erkennbar innerhalb eines Feldes von 180 °, die eine Vorhersage einer sonnigen, bewölkten oder regnerischen Zeit abbilden;
weinigstens drei elektrolumincezierende Dioden (17) jeweils ausgerichtet, um jedes der genannten gravierten Muster zu beleuchten;
eine integrierte Schaltung, die die Beleuchtung der genannten Motivs (14, 15, 16) durch die Dioden (17) nach der Wettervorhersage steuert.

2. Wetterstation nach Anspruch 1 ist **dadurch gekennzeichnet, dass** es autonom ist und mit Batterien eine Schaltungs-Optimierung garantiert, die die Lichtintensität der Dioden (17) steuert in Abhängigkeit von dem Umgebungslicht, gemessen mittels eines Sensors (32), wie beispielsweise eine Fotodiode, ein Fotowiderstand oder ein Phototransistor.
